Europäisches Patentamt

(19) European Patent Office

Office européen des brevets

(11) Veröffentlichungsnummer: **0 052 692**
**A1**

(12) # EUROPÄISCHE PATENTANMELDUNG

(21) Anmeldenummer: **81105413.9**

(22) Anmeldetag: **11.07.81**

(51) Int. Cl.³: **H 04 Q 7/04**
**H 04 B 7/26**

(30) Priorität: **26.11.80 DE 3044446**

(43) Veröffentlichungstag der Anmeldung:
**02.06.82 Patentblatt 82/22**

(84) Benannte Vertragsstaaten:
**AT DE FR GB IT NL**

(71) Anmelder: **ROBERT BOSCH GMBH**
**Postfach 50**
**D-7000 Stuttgart 1(DE)**

(72) Erfinder: **Dallmann, Horst**
**Wiersichweg 5**
**D-1000 Berlin 13(DE)**

(74) Vertreter: **Schmidt, Hans-Ekhardt**
**Robert Bosch GmbH Geschäftsbereich Elektronik**
**Patent- und Lizenzabteilung Forckenbeckstrasse 9-13**
**D-1000 Berlin 33(DE)**

(54) **Funknetz, das mehrere räumlich aneinandergrenzende Funkbereiche umfasst.**

(57) Es wird ein Funknetz vorgeschlagen, das mehrere räumlich aneinandergrenzende Funkbereiche (FI..FIV) umfaßt. Jeder Funkbereich weist mehrere ortsfeste Funkstationen (101...105, 110...115) auf, die zu einer Kontroll- und Überleiteinheit (10, 11) zusammengefaßt sind. Die Kontroll- und Überleiteinheiten sind mit einer zentralen Registrier- und Steuereinheit (20) sowie mit mehreren Vermittlungsstellen (30, 40) verbunden, an die sich Drahtteilnehmer (301...; 401...) anschließen. In jedem Funkbereich (FI..FIV) sendet nur eine ortsfeste Funkstation (105) als Bündelmarkierungsstation ständig erste Impulstelegramme aus. Diese Impulstelegramme enthalten mindestens die Funkbereichsnummer sowie die Kanalnummern der ortsfesten Funkstationen des betreffenden Funkbereichs. Will eine mobile Funkstation (70) senden und empfangen, so muß sie sich zunächst durch ein zweites Impulstelegramm, das mindestens die Funkbereichsnummer und die Kennung der mobilen Funkstation (70) enthält, bei der Bündelmarkierungsstation (105) anmelden. Das zweite Impulstelegramm wird sowohl in der Kontroll- und Überleiteinheit (10) als auch in der zentralen Registrier- und Steuereinheit (20) für den späteren Verbindungsaufbau gespeichert.

./...

48/80
EK/PLI Scht/Li
21. 11. 1980


ROBERT BOSCH GMBH, 7000 Stuttgart 1


Funknetz, das mehrere räumlich
aneinandergrenzende Funkbereiche umfaßt


Stand der Technik

Die Erfindung geht aus von einem Funknetz nach der Gattung des
Hauptanspruchs.

Es ist schon ein Funkfernsprechnetz bekannt (Funkschau, 1975,
Heft 3, Seiten 30 bis 34), das bei der Deutschen Bundespost
die Bezeichnung "öbL-(öffentlich beweglicher Landfunkdienst)
-Netz B" trägt. Dieses Funknetz ist in Funkverkehrsbereiche
unterteilt, von denen jeder mehrere ortsfeste Funksende- und
-empfangsstationen - im folgenden ortsfeste Funkstationen
genannt - aufweist, die auf je einem eigenen Funkkanal senden
und empfangen. Zu dem Funkfernsprechnetz gehört eine größere
Anzahl mobiler Funksende- und -empfangsstationen - im folgenden
mobile Funkstationen genannt -, die in allen Funkverkehrsbereichen operieren können. Jede ortsfeste Funkstation sendet
im unbelegten Zustand dauernd ein Gruppenfreisignal aus, das
die Zugehörigkeit der Station zu einem bestimmten Funkverkehrsbereich kennzeichnet. Das Gruppenfreisignal ist von Funkverkehrsbereich zu Funkverkehrsbereich verschieden und wird in
Form eines Impulstelegramms ausgestrahlt, welches von allen
mobilen Funkstationen empfangen und ausgewertet werden kann,
sofern die Feldstärke am augenblicklichen Standort der mobilen
Funkstation ausreicht.

Ein Nachteil des bekannten Funkfernsprechnetzes besteht darin,
daß die Gruppenfreisignale dauernd von allen unbelegten ortsfesten Funkstationen ausgestrahlt werden. Somit können Störungen
verursacht werden, das sind insbesondere Intermodulationsstörungen bei funknetzfremden Funkteilnehmern.

## Vorteile der Erfindung

Das erfindungsgemäße Funknetz mit den kennzeichnenden Merkmalen
des Hauptanspruchs hat den Vorteil, daß einerseits von ihm keine
Störungen durch unnötige Hochfrequenzbelastung des Äthers ausgehen und daß andererseits der jeweilige Aufenthaltsort einer
mobilen Funkstation sowohl der Kontroll- und Überleiteinheit,
über die die mobile Funkstation Gespräche führen will, als auch
einer von dieser Kontroll- und Überleiteinheit informierten zentralen Registrier- und Steuereinheit bekannt ist, so daß ein
gezielter Gesprächsaufbau zu einem mobilen Teilnehmer leicht möglich ist. Wesentlich ist also, daß nicht mehr alle zu dem Funknetz gehörenden ortsfesten Funkstationen ein Gruppenfreisignal
aussenden, sondern daß dies nur von einer einzigen Funkstation,
im folgenden Bündelmarkierungsstation genannt, übernommen wird.
In der Bündelmarkierungsstation werden die Adressen der in dem
Funkbereich operierenden mobilen Funkstationen erfaßt und gespeichert und an die zentrale Registrier- und Steuereinheit weitergemeldet und dort ebenfalls gespeichert, wodurch das gezielte
selektive Anrufen von mobilen Teilnehmern, die sich irgendwo
innerhalb des gesamten Funkgebiets befinden können, möglich ist.

Durch die in den Unteransprüchen aufgeführten Maßnahmen sind vorteilhafte Weiterbildungen und Verbesserungen des im Hauptanspruch
angegebenen Funknetzes möglich. Besonders vorteilhaft ist ein
Funknetz, bei dem jede mobile Funkstation mindestens beim Verlassen eines Funkbereichs die Funkkanäle, auf denen die Bündelmarkierungsstationen senden und empfangen, auf das Vorhandensein
eines ersten Impulstelegramms abtastet, im Falle des Erkennens
eines ersten Impulstelegramms das Umschalten auf weitere Funkkanäle unterbricht, das erste Impulstelegramm auswertet, die
Funkbereichsnummer an dem Bedienteil blinkend anzeigt, nach Betätigung einer Anmeldetaste des Bedienteils das zweite Impulstelegramm aussendet und nach Empfang eines Quittungstelegramms der
ortsfesten Funkstation die blinkende Anzeige in eine Daueranzeige
übergehen läßt. Damit wird ein einfaches und sicheres Anmelden
einer mobilen Funkstation bei einer der Funkstation unbekannten
Bündelmarkierungsstation erreicht.

Zeichnung

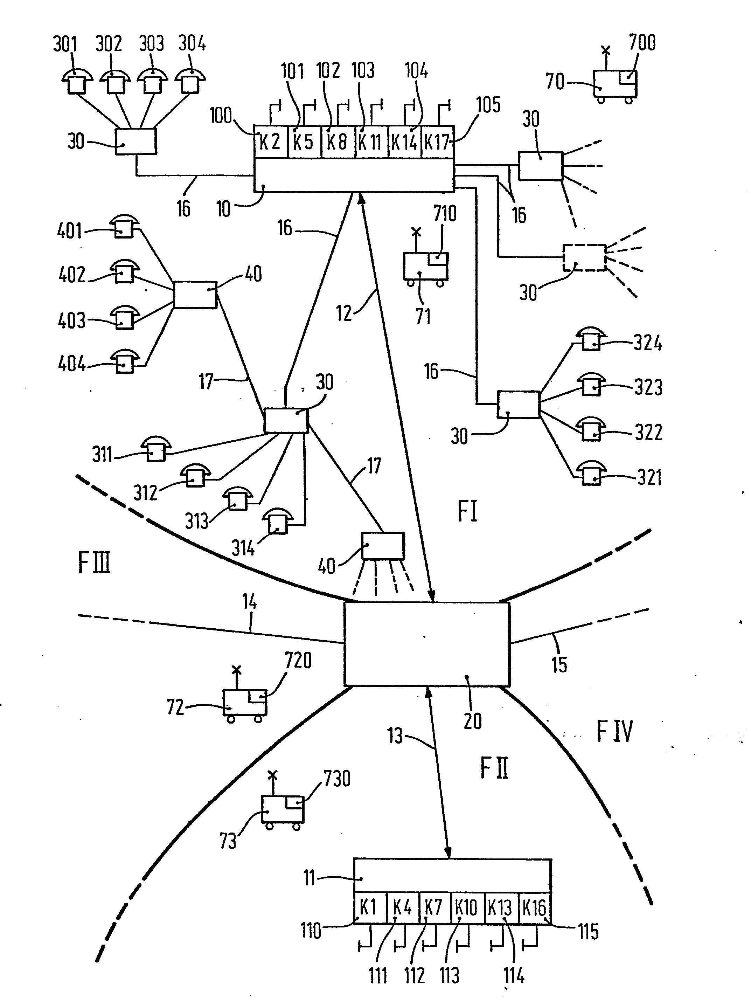

Ein Ausführungsbeispiel der Erfindung ist in der Zeichnung
anhand eines einzigen Blockschaltbildes dargestellt und in
der nachfolgenden Beschreibung näher erläutert.


Beschreibung der Erfindung

Das in der Zeichnung dargestellte Blockschaltbild eines
erfindungsgemäßen Funknetzes umfaßt mehrere aneinandergrenzende Funkbereiche F I ... F IV. Jeder Funkbereich
weist eine eigene Kontroll- und Überleiteinheit 10, 11 auf,
der mehrere ortsfeste Funkstationen 100 ... 105; 110 ... 115
zugeordnet sind. Die Kontroll- und Überleiteinheiten der
Funkbereiche F III und F IV sind in der Zeichnung der Übersichtlichkeit halber weggelassen worden.

Alle Kontroll- und Überleiteinheiten stehen über erste
Nachrichtenleitungen 12, 13 mit einer zentralen Registrier-
und Steuereinheit 20 in Verbindung. In dem Funkbereich F I
sind, wie auch analog in den anderen Funkbereichen, über
zweite Nachrichtenleitungen 16 mit der Kontroll- und Überleiteinheit 10 Vermittlungsstellen 30 verbunden. An jede Vermittlungsstelle können sich sternförmig über weitere Nachrichtenleitungen 17 weitere Vermittlungsstellen 40 anschließen. Zu
jeder Vermittlungsstelle 30, 40 gehören mehrere Drahtteilnehmer 301 ... 304, 311 ... 314, 321 ... 324, 401 ... 404.

Innerhalb des durch das Funknetz erfaßten Gebietes befinden
sich zahlreiche mobile Funkstationen 70 ... 73, die im gesamten Gebiet operieren können. Jede mobile Funkstation weist
ein Funksende- und -empfangsgerät mit einem Bedienteil 700,
710, 720, 730 auf. Das nur schematisch angedeutete Bedienteil
ist mit bekannten Bedienungs- und Anzeigeelementen ausgerüstet.

Im folgenden werden weitere Einzelheiten und die Funktion des
Funknetzes beschrieben.

In jedem Funkbereich F I ... F IV sendet nur eine ortsfeste
Funkstation, das sind in den Funkbereichen F I und F II die
Funkstationen 105  und 115, als Bündelmarkierungsstation
dauernd erste Impulstelegramme an die mobilen Funkstationen
70 .... 73´ aus. Die ersten Impulstelegramme enthalten im
wesentlichen eine den betreffenden Funkbereich, also zum
Beispiel F I, kennzeichnende Funkbereichsnummer und alle
Kanalnummern dieses Funkbereichs, also zum Beispiel die
Nummern der Funkkanäle K 2, K 5, K 8, K 11, K 14 und K 17.
Dabei wird bewußt offengelassen, welcher der sechs Funkkanäle
des Funkbereichs gerade frei ist.

Für den ordnungsgemäßen Ablauf des Funkverkehrs werden noch
zweite, dritte und vierte Impulstelegramme benötigt. Zum
besseren Verständnis seien an dieser Stelle Aufbau und Bedeutung aller vier Arten von Impulstelegrammen beschrieben.

Erstes Impulstelegramm:

Diese von den Bündelmarkierungsstationen 105, 115 ausgesendeten und als Funkbereichstelegramme bezeichneten Impulstelegramme enthalten die Funkbereichsnummer sowie die Kanalnummern
der zu dem betreffenden Funkbereich gehörenden ortsfesten
Funkstationen.

Zweites Impulstelegramm:

Diese als Anmeldetelegramme bezeichneten Impulstelegramme
sendet eine mobile Funkstation aus, um sich bei einer Bündelmarkierungsstation anzumelden und damit die Bereitschaft zur
Entgegennahme von Anrufen über die betreffende Kontroll- und
Überleiteinheit zu bekunden. Das zweite Impulstelegramm enthält mindestens die Funkbereichsnummer und die Eigenidentifikation (Kennung) der mobilen Funkstation.

Drittes Impulstelegramm:

Mit dieser als Ruftelegramm bezeichneten Telegrammart teilt
die Bündelmarkierungsstation einer mobilen Funkstation mit,
über welchen Funkkanal des betreffenden Funkbereichs ein
Gespräch abgewickelt werden soll. Das dritte Impulstelegramm
enthält mindestens die Kennung der mobilen Funkstation und
die Kanalnummer.

Viertes Impulstelegramm:

Dieses Impulstelegramm wird als Wahltelegramm von einer mobilen Funkstation ausgesendet, in deren Bedienteil vorher die
Rufnummer eines gewünschten Drahtteilnehmers eingegeben worden
ist. Das vierte Impulstelegramm enthält mindestens die Funkbereichsnummer, die Kennung der mobilen Funkstation und die
Rufnummer des gewünschten Drahtteilnehmers.

Für die zweiten, dritten und vierten Impulstelegramme sind zur
störungsfreien Gesprächsdurchführung Quittungstelegramme von
der jeweiligen Gegenstation erforderlich.

Für die Auswertung von ersten Impulstelegrammen in den mobilen
Funkstationen und die sich daran anschließenden Operationen
sind folgende Fälle zu unterscheiden:

1. Die mobile Funkstation ist über die Kanalbündelzugehörigkeit, das heißt über die Funkbereichsnummer des Funkbereichs, in welchem sie sich gerade aufhält, nicht orientiert.

2. Die mobile Funkstation kennt die Funkbereichsnummer.

Zu Fall 1:

Das Bedienteil 700 ... jeder mobilen Funkstation 70 ... 73
weist eine besondere Taste auf, bei deren Betätigung sämtliche
schaltbaren Funkkanäle der Bündelmarkierungsstationen 105,
115 ... abgetastet und auf den Empfang einer Funkbereichsnummer geprüft werden. Funkkanäle ohne HF-Träger werden dabei
schnell übersprungen. Sobald ein Impulstelegramm mit Funkbereichsnummer empfangen wird, wird diese durch Blinken
einer Anzeige am Bedienteil angezeigt. Auf die Anzeige kann
zusätzlich akustisch aufmerksam gemacht werden. Wünscht
sich der mobile Funkteilnehmer in dem angezeigten Funkbereich zwecks Aufbaus und Entgegennahme von Gesprächen
anzumelden, so drückt er eine Anmeldetaste des Bedienteils,
wodurch die Aussendung des zweiten Impulstelegramms veranlaßt wird. Dieses Impulstelegramm wird zwecks späterer
Teilnehmerortung in der betreffenden Kontroll- und Überleiteinheit, zum Beispiel 10, und außerdem in der zentralen
Registrier- und Steuereinheit 20 gespeichert. Beim Empfang
des Quittungstelegramms der Bündelmarkierungsstation, zum
Beispiel 105, geht die blinkende Anzeige in eine Daueranzeige über.

<u>Zu Fall 2:</u>

Will sich ein mobiler Funkteilnehmer in einem bestimmten
Funkbereich zur Gesprächsführung (ankommende und abgehende
Gespräche) anmelden, so müssen erstens der Funkbereich in
eine Wähltastatur des Bedienteils eingegeben und zweitens
die Anmeldetaste gedrückt werden. Die Anzeige blinkt dann
wie oben beschrieben. In der mobilen Funkstation wird dann
geprüft, ob ein erstes Impulstelegramm mit der gewünschten
Funkbereichsnummer empfangen wird. Tritt dieser Fall ein,
so wird das zweite Impulstelegramm (Anmeldetelegramm) automatisch ausgesendet. Nach Empfang eines entsprechenden
Quittungstelegramms der Bündelmarkierungsstation geht die
blinkende Anzeige in eine Daueranzeige über, wodurch dem
mobilen Funkteilnehmer angezeigt wird, daß die Anmeldung
ordnungsgemäß erfolgt ist.

Sofern eine mobile Funkstation den Versorgungsbereich einer
Kanalbündelmarkierungsstation verläßt, beginnt die Anzeige
wieder zu blinken. Zusätzlich kann das Verlassen des Funkbereiches auch akustisch angezeigt werden. Die Anmeldung muß
dann in einem anderen Funkbereich erfolgen, und zwar je
nachdem, ob der geschilderte Fall 1 oder 2 vorliegt. Eine
automatisierte Neuanmeldung ist auch möglich.

Der vollständige Gesprächsaufbau zwischen einem Drahtteilnehmer und einer mobilen Funkstation oder zwischen einer
mobilen Funkstation und einem Drahtteilnehmer oder zwischen
mobilen Funkstationen läuft folgendermaßen ab.

A) Will ein Drahtteilnehmer, zum Beispiel 301, eine mobile
   Funkstation, zum Beispiel 70, sprechen, so wählt der
   Drahtteilnehmer über seine Vermittlungsstelle 30 die
   Kontroll- und Überleiteinheit 10 an. Danach wählt er die
   Rufnummer des mobilen Funkteilnehmers 70. Die Kontroll-
   und Überleiteinheit 10 prüft, ob sich die gewünschte
   mobile Funkstation 70 in dem Funkbereich F I aufhält bzw.
   ob sie sich angemeldet hat. Wenn dies der Fall ist,
   sendet die Bündelmarkierungsstation 105 der Kontroll- und
   Überleiteinheit 10 ein drittes Impulstelegramm (Ruftelegramm) aus. Damit wird die mobile Funkstation 70 auf
   einen freien Funkkanal der Kontroll- und Überleiteinheit 10 umgeschaltet.

   Hält sich die mobile Funkstation 70 nicht mehr im Funkbereich F I auf, dann leitet die Kontroll- und Überleiteinheit 10 den Gesprächswunsch des Drahtteilnehmers an
   die zentrale Registrier- und Steuereinheit 20 weiter.
   Ist dort gespeichert, daß sich die mobile Funkstation 70
   zum Beispiel in dem Funkbereich F II aufhält, so erfolgt
   der Gesprächsaufbau über die zentrale Registrier- und
   Steuereinheit 20 und die Kontroll- und Überleiteinheit 11.

B) Will eine mobile Funkstation, zum Beispiel 70, mit einem
Drahtteilnehmer, zum Beispiel 301, in Verbindung treten,
so gibt der mobile Funkteilnehmer zunächst die Rufnummer
des gewünschten Drahtteilnehmers in das Bedienteil 700
ein und startet die Wahlübertragung, das heißt die Aussendung des vierten Impulstelegramms, wobei
zunächst ein freier Funkkanal aus dem Kanalbündel des
Funkbereichs ausgesucht wird. Anschließend wird das
vierte Impulstelegramm (Wahltelegramm) an die betreffende
ortsfeste Funkstation ausgesendet. Die ortsfeste Funkstation bestätigt dann den Gesprächswunsch durch ein
Quittungstelegramm. Anschließend erfolgt der Gesprächsaufbau über die Kontroll- und Überleiteinheit 10 und die
Vermittlungsstelle 30.

C) Wünscht eine mobile Funkstation, zum Beispiel 70, mit
einer anderen mobilen Funkstation, zum Beispiel 71, in
Verbindung zu treten, dann wird bei der mobilen Funkstation 70 zunächst die Rufnummer der gewünschten mobilen
Station 71 eingegeben und die Wahlübertragung gestartet.
Das Bedienteil 700 sucht dann einen freien Funkkanal aus
dem Kanalbündel des Funkbereichs F I und beginnt mit der
Übertragung des vierten Impulstelegramms. Stellt die
Kontroll- und Überleiteinheit 10 fest, daß sich die
gewünschte mobile Funkstation 71 bei ihr angemeldet hat
und hat sie ein Quittungstelegramm an die mobile Funkstation 70 ausgesendet, dann erfolgt der weitere
Gesprächsaufbau über die betreffende ortsfeste Funkstation zu der mobilen Funkstation 71.

Nach Gesprächsende schalten die mobilen Funkstationen wieder
auf den Funkkanal der Bündelmarkierungsstation zurück, das
heißt, sie befinden sich wieder in Anrufbereitschaft.

Grundsätzlich wird eine mobile Funkstation nur über den
Betriebskanal der Bündelmarkierungsstation angerufen, bei
der sich die mobile Funkstation angemeldet hat. Ist die
mobile Funkstation in der Registrier- und Steuereinheit 20
nicht registriert, so wird der rufende Teilnehmer in entsprechender Weise darüber unterrichtet.

Die jeweils gespeicherten Kanalnummern eines Kanalbündels
bleiben auch bei abgeschalteter mobiler Funkstation in dem
Speicher des mobilen Funkgerätes erhalten. Auf diese Weise
ist eine erneute Anmeldung bei einer ortsfesten Funkstation nur dann erforderlich, wenn zum Beispiel der Funkbereich gewechselt wird.

48/80
EK/PLI Scht/Li
21. 11. 1980


ROBERT BOSCH GMBH, 7000 Stuttgart 1


Ansprüche


1. Funknetz, das mehrere räumlich aneinandergrenzende Funkbereiche umfaßt und je Funkbereich mehrere ortsfeste
   Funkstationen aufweist, die mit Drahtteilnehmern fest
   und mit mobilen Funkstationen über je einen Funkkanal
   verbunden sind, wobei jedem Funkbereich ein sich von den
   anderen Funkbereichen unterscheidendes Bündel von Funkkanälen zugeteilt ist und die ortsfesten Funkstationen
   die Nummer ihres Funkbereichs kennzeichnende Impulstelegramme auf ihrem Funkkanal aussenden, die von allen
   mobilen Funkstationen empfangen und ausgewertet werden
   können, dadurch gekennzeichnet, daß in jedem Funkbereich
   (F I ...) nur eine ortsfeste Funkstation (105) von mehreren, eine Kontroll- und Überleiteinheit (10, 11) bildenden ortsfesten Funkstationen (101 ...) als Bündelmarkierungsstation ständig erste Impulstelegramme aussendet,
   die mindestens die Funkbereichsnummer des betreffenden
   Funkbereichs sowie alle zu dem Funkbereich gehörenden
   Kanalnummern (K 2, K 5, K 8 ...) enthalten, daß sich die
   mobilen Funkstationen (70 ...) zum Zwecke der Gesprächsbedienung mit einem zweiten Impulstelegramm, das mindestens die Funkbereichsnummer und die Kennung der mobilen
   Funkstation enthält, bei einer Bündelmarkierungsstation
   anmelden, daß die Bündelmarkierungsstation das zweite
   Impulstelegramm speichert und daß alle Bündelmarkierungsstationen mit einer übergeordneten Registrier- und Steuereinheit (20) verbunden sind, die ebenfalls die zweiten
   Impulstelegramme speichert und die den Verbindungsaufbau
   zwischen den Drahtteilnehmern (301 ..., 401 ...) und den
   mobilen Funkstationen steuert.

2. Funknetz nach Anspruch 1, dadurch gekennzeichnet, daß jede mobile Funkstation (70 ...) mindestens beim Verlassen eines Funkbereichs (F I ...) die Funkkanäle, auf denen die Bündelmarkierungsstationen (105, 115) senden und empfangen, auf das Vorhandensein eines ersten Impulstelegramms abtastet, im Falle des Erkennens eines ersten Impulstelegramms das Umschalten auf weitere Funkkanäle unterbricht, das erste Impulstelegramm auswertet, die Funkbereichsnummer an dem Bedienteil (700, 710 ...) blinkend anzeigt, nach Betätigung einer Anmeldetaste des Bedienteils das zweite Impulstelegramm aussendet und nach Empfang eines Quittungstelegramms der ortsfesten Funkstation die blinkende Anzeige in eine Daueranzeige übergehen läßt.

3. Funknetz nach Anspruch 1, dadurch gekennzeichnet, daß das zweite Impulstelegramm von der betreffenden Kontroll- und Überleiteinheit (10) registriert wird und die Kennung der mobilen Funkstation (70) zusammen mit der Funkbereichsnummer in einem Speicher der Registrier- und Steuereinheit (20) zusätzlich gespeichert wird.

4. Funknetz nach Anspruch 1, 2 oder 3, dadurch gekennzeichnet, daß die Bündelmarkierungsstationen (105, 115) zwecks Vermittlung eines Gesprächs von einem Drahtteilnehmer (301) zu einer mobilen Funkstation (70) die ständige Aussendung der ersten Impulstelegramme unterbricht und statt dessen ein drittes Impulstelegramm aussendet, das mindestens die Kennung der gerufenen mobilen Funkstation (70) sowie die Kanalnummer eines freien Funkkanals enthält, auf welchem das Gespräch geführt werden soll.

5. Funknetz nach Anspruch 1 oder einem der folgenden,
   dadurch gekennzeichnet, daß eine mobile Funkstation (70)
   zur Einleitung einer Gesprächsverbindung zu einem anderen
   Teilnehmer (301) ein viertes Impulstelegramm aussendet,
   das mindestens die Funkbereichsnummer, die Kennung der
   mobilen Funkstation (70) und die Teilnehmernummer des
   gewünschten Drahtteilnehmers (301) umfaßt.

6. Funknetz nach Anspruch 1 oder einem der folgenden,
   dadurch gekennzeichnet, daß Mittel vorgesehen sind, die
   beim Abschalten einer mobilen Funkstation (70) die in
   dem Bedienteil (700) der Funkstation zuletzt gespeicherten Kanalnummern und die Funkbereichsnummer festhält.

# Europäisches Patentamt

## EUROPÄISCHER RECHERCHENBERICHT

| EINSCHLÄGIGE DOKUMENTE | | | KLASSIFIKATION DER ANMELDUNG (Int. Cl.³) |
|---|---|---|---|
| Kategorie | Kennzeichnung des Dokuments mit Angabe, soweit erforderlich, der maßgeblichen Teile | betrifft Anspruch | H 04 Q 7/04 |
| | DE - A1 - 2 537 683 (LICENTIA) <br> * Seite 15, Zeile 6 - Seite 25, Zeile 7 * <br> --- | 1,2,4,5 | H 04 B 7/26 |
| | DE - A1 - 2 322 374 (TELEFONAKTIEBOLAGET LM ERICSSON) <br> * Gesamt * <br> -- | 1-5 | |
| | DE - A1 - 2 727 808 (N.V. PHILIPS' GLOEILAMPENFABRIEKEN) <br> * Fig. 1,2; Seite 16, Zeile 18 - Seite 32, Zeile 1 * <br> -- | 1-5 | **RECHERCHIERTE SACHGEBIETE (Int. Cl.³)** <br><br> H 04 B 7/00 <br> H 04 Q 7/00 |
| | DE - B2 - 2 659 635 (SIEMENS) <br> * Ansprüche 1,2,4-12,16,22 * <br> -- | 1-6 | |
| | DE - B2 - 2 365 043 (MOTOROLA) <br> * Fig. 1-9; Anspruch 1; Spalte 9, Zeile 56 - Spalte 10, Zeile 8; Spalte 15, Zeile 13 - Spalte 16, Zeile 32; Spalte 18, Zeilen 19-50 * <br> ---- | 1-5 | |

### KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

| X | Der vorliegende Recherchenbericht wurde für alle Patentansprüche erstellt. |
|---|---|

| Recherchenort | Abschlußdatum der Recherche | Prüfer |
|---|---|---|
| WIEN | 03-02-1982 | DRÖSCHER |